(19) Europäisches Patentamt
European Patent Office
Office européen des brevets

(11) **EP 3 040 775 A2**

(12) **EUROPEAN PATENT APPLICATION**

(43) Date of publication:
06.07.2016 Bulletin 2016/27

(51) Int Cl.:
*G03B 31/02* (2006.01)    *G06K 19/06* (2006.01)
*G11B 23/38* (2006.01)    *H04N 5/84* (2006.01)

(21) Application number: 15460141.3

(22) Date of filing: 31.12.2015

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: 31.12.2014 EP 14460137

(71) Applicant: **CMC Spólka z ograniczona odpowiedzialnoscia**
**02-737 Warszawa (PL)**

(72) Inventor: **Michalak, Tomasz Maciej**
**01-603 Warszawa (PL)**

(74) Representative: **Marcinska-Porzuc, Aleksandra**
**Kancelaria Patentowa**
**Ul. J. Slowackiego 5/149**
**01-592 Warszawa (PL)**

(54) **METHOD FOR STORING DATA**

(57)    A method for storing data in a film strip wherein a digital data representation is placed in a film strip by means of exposing the film strip, the digital data representation being obtained by transforming data into a graphical form, and this digital data representation in a form of a collection of pixels is registered in a film strip as a data block in an area corresponding to a film frame as regions of irregularly distributed silver halide crystals, the digital data representation being obtained by coding the data with the use of predefined patterns. According to the method, the imaging region or its part in a single film frame is used for registering an image in an analog format; the digital data representation is divided into data blocks in a digital format, the blocks being asymmetrically filled with useful data as well as redundant data; the digital data block is placed outside the region used for registering the image in an analog format; a group of digital data blocks is linked with a pictogram containing information about the location of this group of the data blocks. Moreover, the method includes registering redundant data with coding and computing a verification value allowing for checking the consistency of the data when reading.

Fig. 17

## Description

The present invention relates to a method for storing data in digital form on a photographic film, in particular in applications requiring high compression level, long-term storage of data and archiving data for many years.

There are a lot of methods of storing data for long-term archiving. An optical image, coming for instance from a film camera, can be recorded on a photographic emulsion that is a light-sensitive material obtained by precipitation of fine crystals of silver halides - most frequently bromides, chlorides, iodides - in an aqueous gelatin solution which undergoes a complicated process of ripening. The properties of a photographic emulsion are related to the size, shape, and defects of the crystal structure of the grains and their number. These parameters, in turn, affect the photosensitivity, color sensitivity, contrast, granularity, and the resolving power of the photographic material. A photographic film is a commonly known photographic material for registering images. It consists of several layers and comprises a photosensitive layer, a protective layer and a non-flammable destruction-resistant polyester substrate. Such a film, when stored in stable climatic conditions, may survive several dozens of years, and the tests of the photographic films manufacturers defined the lifetime of the film even for over 100 years without losing its content. This is confirmed by the condition of movies from the beginning of the XXth century. When stored properly, they can be reproduced today without significant loss of quality. However, the aging process of the photographic film leads to a change in the structure of the silver molecules, thus causing a degradation of the recorded data. In case of black and white films this process is many times slower than in color films, where the photosensitive layer contains three levels of emulsion sensitive to three different colors. Therefore, the preferred solution enabling long-term data storage is based on the use of the black and white photographic film.

Furthermore, methods are known for registering and archiving various documents on microfilms, that are commonly used for example in large libraries, where microfilms or microfiches are used for contrast recording with size reduction of line-type image documents, such as drawings, text prints, schemes, and plans. Microfilms have usually very fine grain of the photosensitive material, which ensures their high resolution and contrast; however, the adverse effect is the low film speed, and, as an additional disadvantage, the lack of halftones in contrasty areas.

Moreover, data, in particular such as documents, audio recordings, and movies, at present may be effectively stored and archived in digital form, this being practiced commonly by individuals as well as by big organizations. However, if there is a need for storing data for many years, there are no verified methods of storing data in the digital form. Existing methods of storing data on electronic media do not guarantee the correct reading out the data after many years, or the cost of storing is very high. For example, even the CD or DVD discs coming from the same manufacturer differ significantly from each other in terms of durability. Apart from many advantages of using such media, the suitability of the discs is reduced by three important factors: too intensive light impairs the organic dye, the metallic layer becomes oxidized, and the polycarbonate does not withstand high temperatures. On the other hand, hard disks are not resistant to high temperatures and humidity, and additionally do not tolerate shocks and impacts. The archiving with the use of hard disks is hindered also by other factors, as for example possible corrosion of the connections, At the same time flash disks stop to operate after some number of writing-erasing cycles, and even if one does not use such a disk at all - it will loose its charge within several years. Generally, it is accepted that optical media have an average lifetime up to 5 years, hard disks, flash memories, and SSD disks up to 10 years, and magnetic tapes up to 20 years. Anyway, all these media require special interfaces for reading the stored data.

In order to ensure the possibility of reading out the recorded data, it is necessary to copy the data onto newer media in lifetime corresponding cycles of a particular media type, this being time-consuming and raising the archiving costs. Existing methods of storing data in analog form, such as negatives, photographs, prints etc., allow for storing data in a form that is suitable to read the data later on, however, this way of storing requires large storage area for the archives. Moreover, considering for example digital photographs that are printed to analog media and scanned again, as well as in case of many other types of data, re-digitalization leads to a loss of quality. For storing data for the purpose of everlasting archiving all popular media are used, such as 8 mm and 16 mm microfilms, as well as 35 mm, 70 mm, and 105 mm film strips. Therefore, the film strip became the main medium used for everlasting archiving due to its physical properties, ensuring long-term storing without a loss of quality of the stored data. Individual documents are photographed onto subsequent frames of the strip, and then the film is developed in a photochemical process. Copying is carried out with the use of photographic techniques.

Also, methods are known enabling to record data in digital form in film strips containing a magnetic layer. For example, in the U.S. patent No US5751505A a method is disclosed for recording data onto a plurality of tracks extending along the tape, with segment lengths corresponding to frame lengths, the data being registered in a form of blocks having starting code portions defining the beginning of a particular block. At the end of each block an end code portion is placed defining the end of the block. The blocks are divided into fields, the initial field having a 6-bit structure, then a 12-bit structure is placed defining the data type, and a parity bit is added additionally toward the end of the block. Similarly, in the U.S. patent No US6229659 related to a magnetic tape, individual tracks are disclosed divided into segments and blocks, that are equipped with headers for synchronizing individual data as well as for searching through a portion of magnetic tape in which particular data is stored.

However, solutions known from the state of the art relate to methods for storing data onto magnetic tapes or photographic tapes containing a magnetic layer and usually focus on the maximum possible data packing on the tape, using various compression and coding systems. For example, in the U.S. patent application No US2010/0180180 a method is disclosed for writing data onto a magnetic tape in a multi-track form with interleave and error correction coding (ECC), where data are specifically encoded.

Also, attempts have been taken to develop a digital everlasting archiving method, wherein materials are scanned and then written onto a film strip in a discrete form, by means of a laser imagesetter. It can be seen only in very large magnification that individual pixels are exposed. For a naked eye, the image looks as an analog one. The reading is performed by means of either a film scanner or readers, for example like these used for reading microfilms.

Also, analog-digital hybrid techniques are being developed allowing for writing data in an analog form along with an additional digital information, this being implemented to reduce the amount of used information medium. An example of such a technique is the technology developed by Point. 360 Digital Film Labs. In this technology a colored image is written in a black and white form along with the information about the color.

Moreover, storing digital data on a film strip is connected with converting the digital data representation having a form of a digital image to an analog form. On the contrary to a digital image, containing a particular, countable number of points, the resolution of photosensitive materials is difficult to define and express as a numerical value. An image on the film strip, created by irregularly distributed silver halide crystals, giving a specific impression of grain and optical density, gives no simple grain-pixel assignment. Both the writing and reading processes have risk of ambiguous image representation. Therefore, no method has been developed for storing data on a film strip with the aim of reaching a possibly long storage period without significant degradation of data, and at present no technologies are offered in the market for archiving and storing data in a digital form on a film strip.

However, no method has been developed so far for archiving digital data that would aim at as long as possible storage time of registered digital data without significant data degradation, that could be placed along with analog data in order to complement the analog information, using the same medium. No techniques are available in the market at the present time making it possible to store large amounts of highly compressed digital data on a film strip as a completion for analog data stored therein or as an independent information medium.

Therefore, the object of this invention is to provide a method for storing data in a digital form on a film strip. Another object of the invention is to provide a method for storing data, which allows for long-term and simple data archiving on a film strip without incurring high economic costs for the storage. Also, the method takes into account the fact that the medium, on which the data is stored, undergoes an aging process and, by means of the proposed solution, it minimizes and compensates this effect. Furthermore, the object of the invention is to ensure the possibility of reading data from the data medium even in the case of partial damage of the data medium.

According to the invention, a method for storing data on a film strip includes a step of inserting a digital data representation by means of exposing the film strip, the digital data representation being obtained by means of transforming the data into a graphical form, and this digital data representation in a form of a collection of pixels is registered in a film strip as a data block in an area corresponding to a film frame as regions of irregularly distributed silver halide crystals, the digital data representation being obtained by coding the data with the use of predefined patterns. According to this method, the imaging region or its part in a single frame is used for registering an image in an analog format; the digital data representation is divided into data blocks in a digital format, the blocks being asymmetrically filled with useful data as well as redundant data; the digital data block is placed outside the region used for registering the image in an analog format; a group of digital data blocks is linked with a pictogram containing information about the location of this group of the data blocks.

Moreover, this method includes registering redundant data with coding and computing a verification value allowing for checking the consistency of the data when reading.

In order to preserve the data redundancy, preferably, a known ECC coding is used. Preferably, in every film frame beyond the imaging region also data is exposed that allow reading the parameters, which were used to write the data, without imaging device,

A set of metadata relating to data written in the imaging region is exposed on a film frame above the imaging region of the film strip.

Preferably, the set of metadata comprise a crossmark, a color scale, and a positive/negative marker.

The additional set of data is exposed preferably on both sides of the imaging region of the film strip.

Preferably, the additional set of data comprises frame resolution, data block size, data block density, ECC correction, ECC block size, and number of the redundant bits, filename, and an information field.

The set of support data assisting the exposure and the photochemical process is exposed in the film frame preferably below the imaging region of the film strip or, alternatively, on both sides of the imaging region of the film strip.

The set of support data assisting the exposure and the photochemical process comprises markers, data explicitly identifying the film frame, and a gray scale that is, preferably, located below the imaging region in a form of two stripes, each having twenty-one regions of different gray levels, in order to calibrate the photochemical process during developing the photographic material.

Preferably, the imaging region of the film strip is parameterized and adapted to technical capabilities of the registering devices.

The smallest data block is a block of four pixels, where three pixels are the data medium and the fourth one is the medium verifying the data.

Preferably, the pixels are grouped into data blocks in which the number of pixels in a row (line) is equal to the number of pixels located in a column.

According to the method of this invention it is possible to write many times more information within a single frame of the photosensitive material than in an analog form. Due to the fact that the developed method for storing the digital data representation involves the redundant data, it is possible to read the contents of the strip even in the case of a partial loss of the medium, e.g., due to a damage of the film strip. This type of recording allows reading the data without losing information. Simultaneously, for many types of data, the described storing process will reduce, by many times, the amount of media required for recording and archiving the data. For reading the data from the film strip a film scanning device and a decoder may be used. Present generations of film scanners have still better reading parameters and there is no risk of non-compatibility between the hardware and the medium, as in the case of archiving on magnetic media.

Using the method for archiving documents, for example for registering supplementary information about pictures archived in an analog form, will allow for registering all the information only on a film strip, without the necessity of creating additional documentation with information about the archived pictures. With this the amount of used medium (film strip) will not be increased since the format makes it possible to register information in an arbitrary location within the film frame, including the region between perforations - in regions that have not been employed as information medium so far.

Another example of applying the method is storing in a form of a digital soundtrack, so called tone negative. So far, it is archived on a film strip in an amount corresponding to 24 frames per second. When archiving using the developed format, the amount of the film strip may be 100 times smaller, i.e., 4 seconds within 1 frame.

Using the method for storing data for archiving purpose, for example, documents related to employing employees, where the period of storing such data on unmadifiable media, due to law regulations, is 50 years, will reduce the amount of used film media from 100 to 4000 times when comparing to the analog method of recording the data on the film strip in a form of microfilms. This depends on the digital format of the stored documents. An extreme case is storing unformatted text, for example as a typescript. For example, 1 page of a typescript, occupying 1 film frame in the analog form, occupies c.a. 2000 bytes in the digital form. Using an assumed capacity of a single frame, presently about 13 MB, and using the error correction mechanism along with the storing redundancy, it is possible to locate over 4000 pages of a typescript on a single film frame.

Another example of using the method according to the invention is storing, in a digital form, restored photographs and movies. In the case of digitalization of analog images a loss of quality occurs related to the analog-digital conversion. The process of restoring old photographs or movies involves the digitalization of the original image, the reconstruction treatment, and recording the restored image again in an analog form. However, a subsequent digitalization, for example in order to publish in media, involves a loss of quality of details. Storing and archiving with the use of the method according to the present invention will make it possible to publish the images even after many years without losing the quality.

The invention will be explained in more detail in reference to an exemplary embodiment that is shown in the drawings, in which:

- Figure 1 shows a known microfilm with recorded data in an analog form;
- Figure 2 shows a known scheme of coding a color image onto a black and white film strip according to the Point.360 Digital Film Labs technology;
- Figure 3 shows a data block of a resolution of 2 pixels, stored according to the invention;
- Figure 4 shows a data block of a resolution of 3 pixels, stored according to the invention;
- Figure 5 shows a data block of a resolution of 4 pixels, stored according to the invention;
- Figure 6 shows a data block of a resolution of 5 pixels, stored according to the invention;
- Figure 7 shows a data block of a resolution of 6 pixels, stored according to the invention;
- Figure 8 shows a data block of a resolution of 7 pixels, stored according to the invention; and
- Figure 9 shows a part of a table with first 32 values of the data (out of 1024 values), and the verification values along with the corresponding gray levels;
- Figure 10 shows an arrangement of the metadata in a frame defined as "4K+ Type";

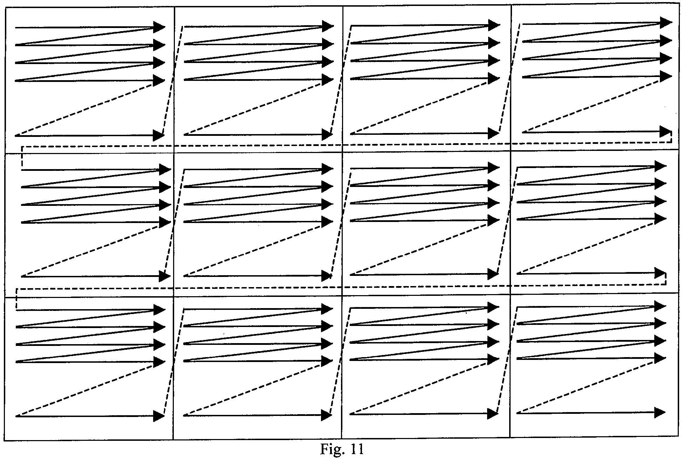

- Figure 11 shows an order of placing data within the imaging region of the film frame;
- Figure 12 shows an effect of an encoded segment of data according to the method with the use of a block of a resolution of nine pixels in an arrangement of 3 x 3 pixels;
- Figure 13 shows a segment of stored data utilizing a block of a resolution of sixteen pixels in an arrangement of 4 x 4 pixels;
- Figure 14 shows a single frame with recorded data and metadata;

- Figure 15 shows a control pictogram;
- Figure 16 shows a location where metadata are written;
- Figure 17 shows a portion of data encoded according to a method according to the invention;
- Figure 18 illustrates intersections of synchronizing lines; and
- Figure 19 shows a device for writing data on a film strip.

It should be emphasized, however, that the examples described below are not to limit the scope of the invention, and rather illustrate one of many possible applications of the present invention.

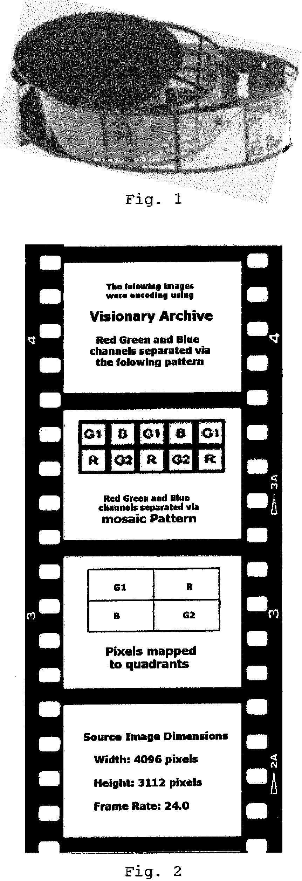

The image recorded on the film strip shown for example in Fig. 1 is, by definition, an analog image. Because both the writing process as well as the reading process suffer from the risk of non-uniqueness of the representation, a method for reading correction is proposed in order to protect against the adverse effect of data degradation during the storing process. For this purpose the proposed method employs the data as well as verifying bits, It is essential to select such parameters of the verifying procedure that will guarantee the uniqueness of decoding. The storing format according to the invention is based on transcoding bytes of electronic data to the graphical form with the use of a predefined algorithm. The set of data occurring in the graphical form is then exposed onto a film strip sequentially in data fields. The capacity is selected according to parameters chosen for the project.

Figure 2 shows the prior art coding scheme for a color image onto a black and white film strip in the Point.360 Digital Film Labs technology.

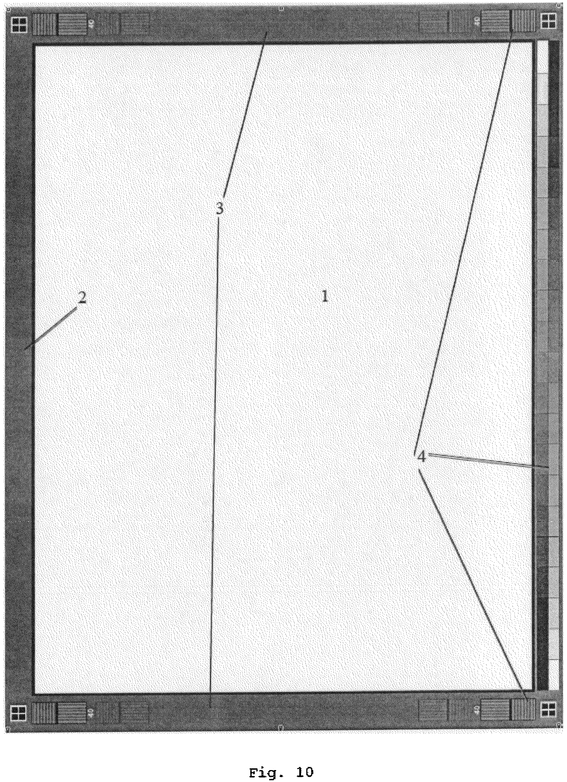

In the method according to the invention the capacity of the frame is configured depending on the parameters selected in the project. The parameters of the algorithm are: image resolution, bit depth, and ECC coding. The screen resolution parameter is predefined in advance for individual users in reference to the apparatus they have for exposing the film strip, such that, for example, a laser imagesetter or a film printer. In an embodiment, for imaging the film strip, the base resolution of the recorded material is 4K, i.e., such a resolution that has 4096 pixels in a horizontal line. The field of the exposed image has dimensions 4096 x 3112 points, defining an imaging region 1 illustrated in Fig. 10 further in this description. This is a frame size displayed by imaging devices, for example image projectors. Beyond the field, that is visible for the imaging devices, there is a region of the film that can be exposed by the imagesetter and read by scanners of a size of so called "archival" frame. Then, the resolution that is possible to expose equals 4588 x 3484 pixels. Such a resolution is called 4K+. Next parameter is the data block size. A data block has a shape of a field of side x, where x is the block size parameter. Asymmetrical shape of filling the block makes it possible to apply an error correction algorithm and to define an appropriate algorithm that allows to check the correctness of reading the block basing on complementary values. These algorithms will be described later.

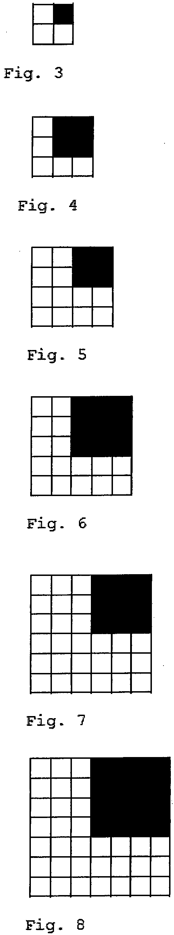

The smallest data block is the block shown in Fig. 3 and having four pixels distributed in two rows and two columns, out of which 3 pixels are the data medium and the fourth one is the medium verifying the data. Figs. 3 to 8 show different examples of pixel arrangements with specified data blocks, wherein in all cases the white fields denote the data medium and the black fields denote the data-verifying medium. Fig. 4 shows an example of a data block of a size of nine pixels, wherein five pixels are the data medium and four pixels are the data-verifying medium. The pixels being the data medium constitute the first column from the left and the last third row from the bottom, whereas the pixels being the data-verifying medium are located in the remaining fields of the block. Fig. 5 shows a data block of a size of sixteen pixels, wherein twelve pixels are the data medium and four pixels are the data-verifying medium. The pixels being the data medium constitute the first column and second column from the left and the last row and last but one row from the bottom, whereas the pixels being the data-verifying medium are located in the remaining four fields of the block. Fig. 6 shows a data block of a size of twenty-five pixels, wherein sixteen pixels are the data medium and the remaining nine pixels are the data-verifying medium. The pixels being the data medium constitute the first column and second column from the left and the last row and last but one row from the bottom, whereas the pixels being the data-verifying medium are located in the remaining nine fields of the block. Fig. 7 shows a data block of a size of thirty-six pixels, wherein twenty-seven pixels are the data medium and nine pixels are the data-verifying medium. The pixels being the data medium constitute the first, second, and third columns from the left and the last three rows from the bottom, whereas the pixels being the data-verifying medium are located in the remaining nine fields of the block. Fig. 8 shows a data block of a size of forty-nine pixels, wherein thirty-three pixels are the data medium and sixteen pixels are the data-verifying medium. The pixels being the data medium constitute the first three columns from the left and the last three rows from the bottom, whereas the pixels being the data-verifying medium are located in the remaining sixteen fields of the block.

Transcoding algorithm

The algorithm parameters

- Scaling
- X and Y size
- Bit depth
- ECC coding

*Scaling* - the basic size of a data block is a 2x2 square. Depending on the scale, its is exposed as 2x2 pixels, 4x4 pixels (at a scale of 2), 6x6 pixels (at a scale of 3) etc.

*X and Y size* - specifies the size that is used for writing data. The size is expressed in terms of a number of data blocks.

*Bit depth* - or the grayscale depth, is a parameter of a digital image that denotes the number of gray shades that are possible to obtain in the image. In the case of writing and reading devices, this parameter denotes physical properties of the device and the scale the device is able to represent. The parameter defines how many bits in the memory have been assigned to every pixel for recording the information corresponding to the image shade. The higher the number of bits, the bigger the grayscale and thus the bigger the capacity of the information medium. For a 1-bit depth a single bit is assigned to every pixel of the image. Every pixel gets one out of two colors - usually white or black, and an image is then obtained of a uniform color depth, i.e., a line-type image. However, due to the data verification a gray shade is used that is different by at least one from the black and white. For a 2-bit depth 2 bits are dedicated to each pixel which can have one out of 4 gray shades. For a 4-bit depth each pixel has 4 bits and therefore it can have one out of 16 gray shades. For an 8-bit depth eight bits are assigned to each pixel and, as a consequence, it may have one out of 256 gray shades: from the white through the gray shades to the black. This creates a so-called grayscale image, where 8-bit images are written in the Grayscale mode. Similarly, a 10-bit depth denotes assigning ten bits to each pixel that can have one out of 1024 gray shades: from the white through the gray shades to the black. A 10-bit depth is the native format for the tests of the imagesetter used in implementing the method according to the invention and for data archiving. The 10-bit depth has been assumed to be the boundary depth for the use in the digital recording of data on the film strip. For a 16-bit depth a color is written in sixteen bits and enabling to encode 65536 gray levels.

Description of the algorithm

The algorithm of the error correction and determining an appropriate algorithm that enables to verify the correctness of reading a given block basing on complementary values is as follows. The input data, in zero-one form, is divided into bit blocks corresponding to the bit depth parameter. For each bit block a numerical value of the corresponding black level of the image is computed. This value corresponds to a bit block value and is represented in a binary form. In order to ensure the uniqueness of the reading, a verification value is computed basing on the data value. The distance, in the grayscale, of the check bit for the neighboring data bits is the square root of all possible values, i.e., for example for the 10-bit depth coding, where 1024 values are possible, the distance of the verification value for the neighboring data values is 32, whereas for data of a difference of two levels, the distance of the correction bits is 64. It is convenient to generalize this relation in a form of an expression defining the verification value for an *n*-bit coding for a value of data equal to *val*:

$$n10\text{-}val*\mathrm{sqr}(n10) \text{ modulo } (n10+1)$$

where *n10* is the biggest natural number in the decimal system written in *n* bits.

For example, for *n* = 2, the value of *n10* is 3, corresponding to a value of 11 in the binary system, *for n* = 8, the value of *n10* is 255, corresponding to a value of 11111111 in the binary system.

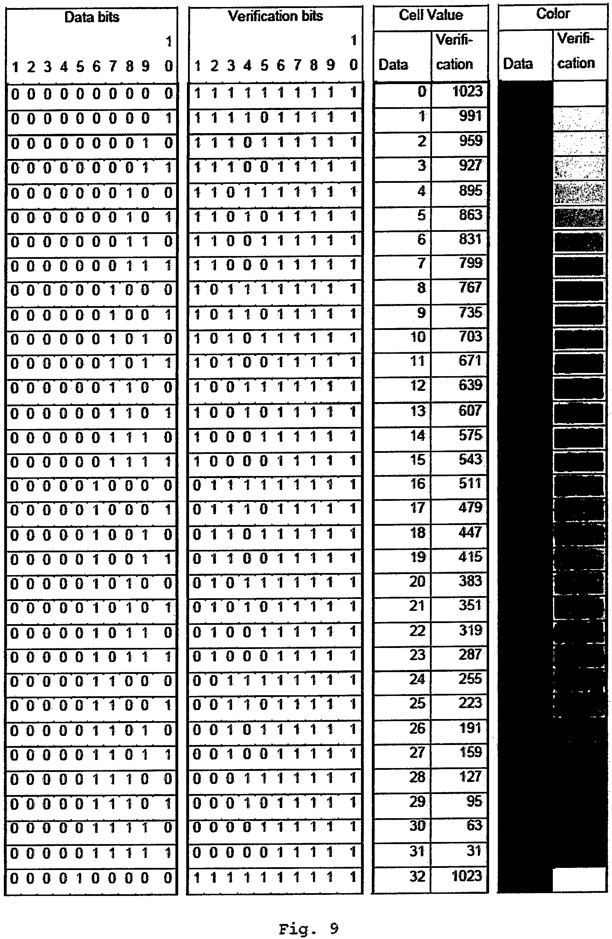

Fig. 9 shows a segment of a table showing the first 32 values of data (out of 1024) along with the verification values, and also the corresponding gray levels.

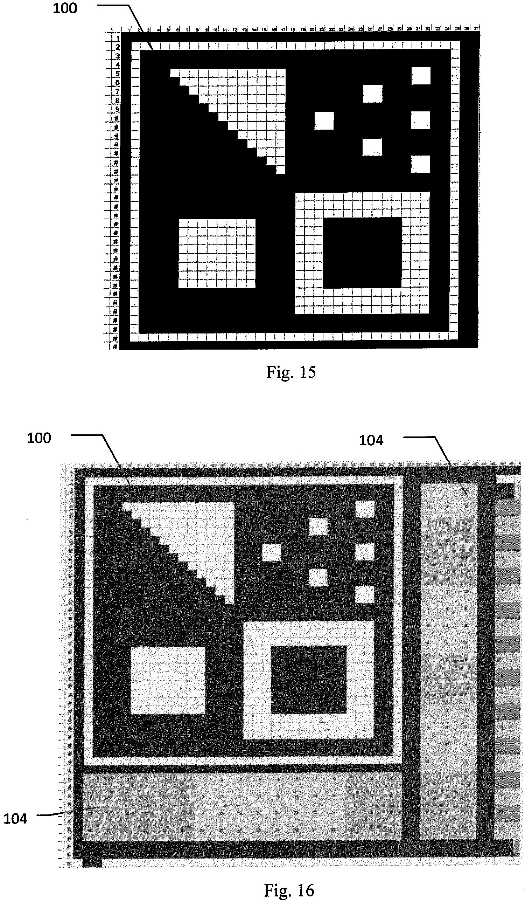

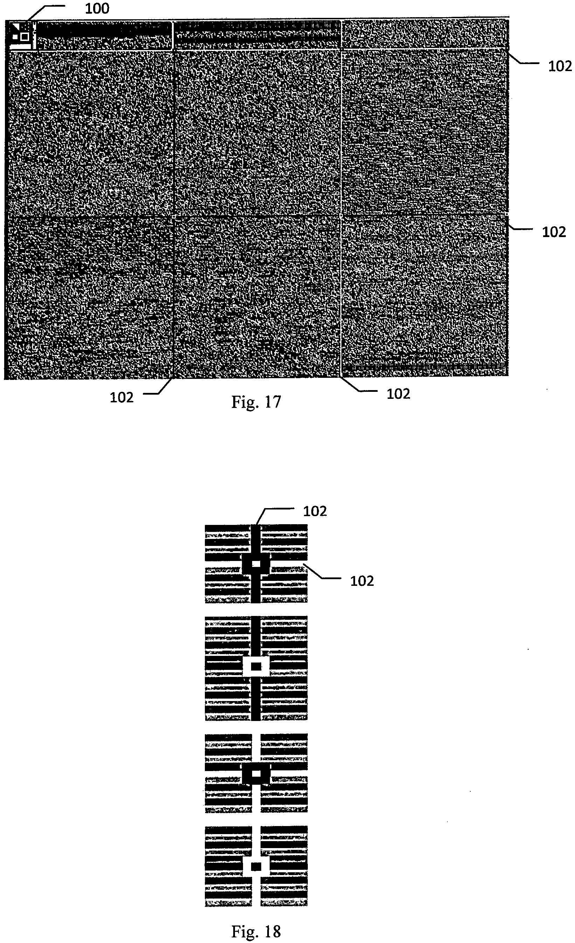

Apart from the process of verifying individual data blocks by using the redundant coding of individual data blocks, the digital storing format itself has been designed so as to apply a further security level by recording redundant data in the film frame. For this purpose algorithms have been employed that are used for the data transmission error correction ECC. This makes it possible to obtain a full or partial correction of errors resulting from interference. The correction coding is then used in the cases, when a retransmission is costly, troublesome or impossible, for example because of time limitations. The ECC correction is successfully employed in particular for cellular communications systems. In the case of writing data on a film strip the benefits from using this type of correction are analogical. A written data series may be compared to a single transmission of a signal, without the possibility of its repeating. Due to the existing methods of using film strips, it was impossible to apply correction codes with the analog data recording. The method according to the invention employs the correction codes for verifying data recorded on the film strip by including a sufficient redundancy of the information together with each transmitted data block, so as to allow the receiver to deduce the transmitted character. Basing on theoretical tests and studies, a known error correction system BCH has been chosen for the method according to the invention. Then, the input data are divided into segments corresponding to subsequent data frames. Individual film frames contain the constant portion of the project, pictogram, metadata, and the data fields, as illustrated in Figs 16 and 17.

Data are placed in subsequent data blocks starting from the upper left corner of the frame till the lower right corner. Similarly, in individual groups of data blocks the data are placed in rows from the upper left corner to the lower right corner. The upper left fragment of the group of data blocks, that contains an asymmetrical pictogram, is excluded from writing data. The shape and color of the pictogram make it possible to determine the orientation of the group of data blocks and to determine whether the group of data blocks is exposed as positives or negatives.

In a preferred embodiment, every 128 columns and every 128 horizontal rows in a group of data blocks a line 102 is inserted of a width of a single column or a row, alternately black and white, the purpose of which is to assure synchronization for determining coordinates of individual groups of data blocks. The first horizontal synchronizing line 102 is located directly below the pictogram and parameters, i.e., after 22 lines of horizontal data blocks in the embodiment of Fig. 17. The intersections of the synchronizing lines are shown in Fig. 18.

In a preferred embodiment data are written in a film strip by placing a digital representation of the data by means of exposing the film strip. The digital representation is obtained by transforming the data into a graphical form and this digital data representation, having a form of a set of pixels, is registered as a data block in the film strip, in a region corresponding to a film frame, as regions of irregularly distributed silver halide crystals. The digital representation of data is obtained by encoding the data using predefined patterns. In an embodiment of the method according to the invention, the imaging region or its part in a single film frame is used for writing an image in an analog format, whereas the digital data representation is divided into data blocks, in a digital format, asymmetrically filled with useful data and redundant data. A single data block in the digital format is placed outside the region used for writing an image in the analog format. A group of data blocks is linked with a pictogram containing an information about the location of this group of the data blocks. Moreover, this method includes registering redundant data with coding and computing a verification value allowing for checking the consistency of the data when reading.

Preferably, a group of data blocks is placed in a region of the film strip around the imaging region. In such a case the whole imaging region may be used for registering the image in the analog format, It may be a photograph, for which additional digital data are written in a group of data blocks located within the same frame but outside the imaging region. In an alternative embodiment, this additional information is written in more than one group of data blocks. In one such example a group of data blocks (or groups of data blocks) in a digital format is placed between perforations of the film strip.

In another embodiment a data block is located in an imaging region that is not used for writing an image in an analog format. In this example only part of the imaging region is used for registering an image in an analog format, whereas the remaining part of the imaging region is used for registering a data block in a digital format.

Preferably, the location of a data block in a digital format in a region corresponding to one film frame does not depend on the location of another data block in a region corresponding to another film frame. This allows to obtain significant elasticity in using the area of the film frame since the whole film frame is treated irrespective of other film frames.

A particular advantage of this method is that, in an embodiment, more than one data block may be placed in a region corresponding to a single film frame.

The amount of digital data that can be written in a single data block depends on the size of the data block and the bit depth.

In a preferred embodiment a pictogram contains also the information about that whether the data block is exposed as a positive or a negative.

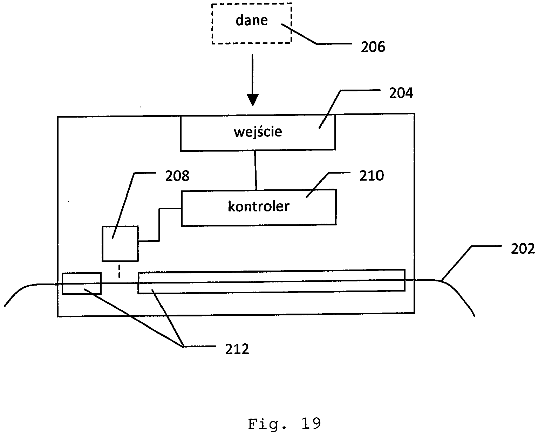

In a preferred embodiment illustrated in Fig. 19 a device 200 is presented for writing data in a film strip 202. The device has an input 204 for inputting data 206 to be written in the film strip 202. Moreover, the device 200 has a light source 208 used for exposing the film strip 202, and a controller 210 of the light source 208. The controller 210 receives the data from the input 204 to be written in the film strip. Also, the device has a guiding system 212 for guiding the film strip 202. The device is adapted to register data in a film strip according to any of the disclosed method embodiments.

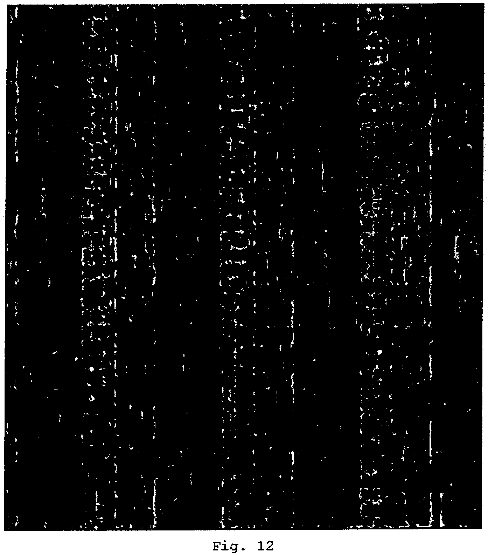

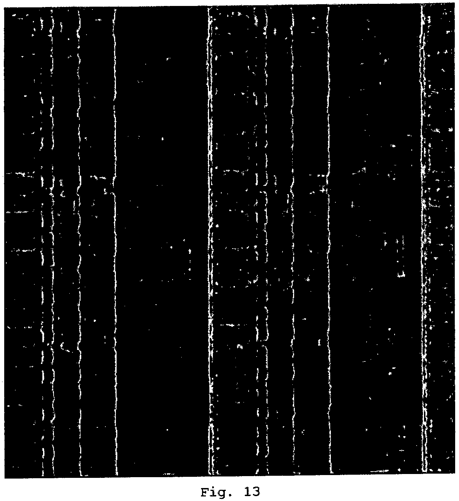

The field extending beyond the imaging region 1 is used to place the metadata related to the parameters of the data recorded in the film frame, and to characters enabling to carry out the optimal exposure along with the photochemical process. They comprise such elements as a gray scale and marker. In this region also a set of data is placed that is readable without using any algorithms, i.e., data written as an explicit text. The specification of the writing format does not limit the way the elements may be arranged. Without departure from the scope of the present invention, it is possible to arrange these elements in another manner, for example implementing different size of the data field. Each of such a field declaration is designated as a "frame", and additionally a definition of coordinates how to read the parameters of a given frame may be placed on the exposed film material as a frame of additional data located in an information field. In the method according to the present invention the frames are created that contain, among others, data about the project in a text form. Fig. 10 shows an information data arrangement extending beyond the imaging region 1 in the case of a "4K+" - type frame. The reference number 2 denotes a metadata field. The reference number 3 denotes regions that are used for the extra data, and the reference number 4 denotes data assisting the exposure and the photochemical process. In the field 2 there are located a crossmark, i.e., a sight cross, the color scale, and a marker describing the type of the film i.e. whether it is positive or negative. In the field 3, the following parameters are placed: data defining the source file, frame resolution, data block size, data block density, ECC correction data, ECC block size, number of the redundant bits, filename, and an information field. The set of data 4 assisting the exposure and the photochemical process comprises a graphic field and a comment in a binary field. The lower frame margin has two strips containing twenty-one regions of defined gray levels. It is a so-called gray scale used for calibrating the photochemical process, and in particular for developing the photosensitive material. In the course of this process parameters are controlled in order do obtain appropriate saturation and contrast. The upper frame margin is used for placing metadata 2 related to digital data information. The margin is divided in a vertical pane. The upper field is used for writing an explicit text, and the lower one is used for coding binary data. Such an arrangement protects the binary data against scanning an incomplete region of the frame. The explicit text may be read without scanning, with the use of a magnifying glass, and the binary data may be read using a software. Exemplary results of writing a digital data representation implementing the method according to the invention are illustrated in Figures 12, 13, and 14. Fig. 12 shows a result of an encoded segment of data when using a block of a resolution of nine pixels arranged in three rows and three columns. Fig. 13 illustrates a segment of data written with the use of a block of a resolution of sixteen pixels arranged in four rows and four columns. Fig, 14, in turn, illustrates a single frame with written data and metadata presented explicitly.

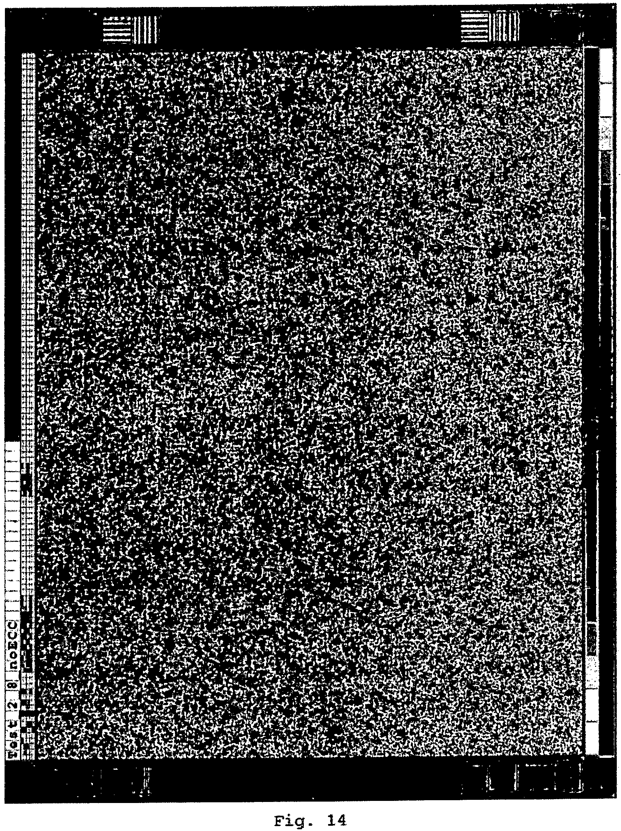

In one embodiment of the method according to the invention that is best adapted to large projects containing several hundreds or thousands of film frames, it is possible to add to the project, with some interval (for example in a form of selected frames), frames with information data containing parameters written in an explicit text, as illustrated in Fig. 14, and also an analogue image of selected frames. The fields of the side margins, left and right, are used for defining other data envisaged for encoding archival data, for example information data related to tintcoloring or sound. The method of recording these data will not be described here since it belongs to other inventive solutions. The information data are written in blocks of 32 x 86 points divided into five regions. Each of these regions is filled with one out of four gray levels, 0%, 33%, 66%, 100%, respectively, i.e. each block enables to write ten bits of data, making it possible to write a number within a range of 0 - 1023. In. case of a data that require a higher range of parameters, two subsequent blocks can be assigned, this enabling to write twenty bits of information data, i.e., a number from a range from 0 to 1,048,575.

Alternative embodiments

A method of writing data in a film strip by placing a digital representation of the data in an imaging region in every film frame by means of exposing every film frame, wherein the digital data representation in a form of a set of pixels is registered in the film strip as regions of irregularly distributed silver halide crystals, the digital representation of data being obtained by encoding the data using predefined patterns. In the method the digital data representation is transformed into a graphical form, where individual pixels of the digital data representation are easily associated with regions of silver crystals of the film strip, creating a parameterized, in a matrix form, imaging format having at least two parameters affecting the number of possible digital data representations that can be written in a single film frame. In the said transformation a resolution parameter is defined determining the dimensions of the data field, being the portions of the film frame that are visible in imaging devices, and a parameter is defined for the number of gray levels, and then the digital data representation is divided into blocks that are filled asymmetrically with useful data and redundant data creating a code combination, by means of which an asymmetrical shape of exposure is obtained. Data blocks of such a shape are sequentially exposed in consecutive film frames in the imaging region 1. The film strip may have different resolution parameters and speeds. The redundant data are used in an error correction system for verifying the useful data by computing a verification value that is placed in the film strip as well, this making it possible to verify the consistency of the data when writing and reading the data. Moreover, the asymmetrical shape of a data block is used for synchronizing individual imaging lines when writing and reading the digital data representation in the film strip. Additionally, metadata 2, additional data 3, and support data 4 for supporting the exposition and the photochemical process.

For preserving the data redundancy ECC encoding is used.

Moreover, in a preferred embodiment, in every film frame beyond the imaging region 1 also data is exposed that allow reading the parameters, which were used to write the data, without imaging devices.

In a preferred embodiment, a set of metadata 2 relating to data written in the imaging region 1 is exposed on a film frame above the imaging region 1 of the film strip.

In a preferred embodiment, the set of metadata 2 comprise a crossmark, a color scale, and a positive/negative marker.

In a preferred embodiment, additional data 3 are exposed i a film frame on both sides of the imaging region 1 of the film strip.

Moreover, the additional data 3 comprise frame resolution, data block size, data block density, ECC correction, ECC block size, number of redundant bits, filename, and an information field.

In a preferred embodiment, support data 4 assisting the exposure and the photochemical process are exposed in the film frame below the imaging region 1 of the film strip or, alternatively, on both sides of the imaging region 1 of the film strip.

Moreover, the support data 4 assisting the exposure and the photochemical process comprise markers, data explicitly identifying the film frames, and a gray scale that is, preferably, located below the imaging region 1 in a form of two stripes, each having twenty-one regions of different gray levels, in order to calibrate the photochemical process during developing the photographic material.

In a preferred embodiment, the imaging region 1 of the film strip is parameterized and adapted to technical capabilities of the registering devices.

In a preferred embodiment, the smallest data block is a block of four pixels, where three pixels are the data medium and the fourth one is the medium verifying the data.

In a preferred embodiment, the pixels are grouped into data blocks in which the number of pixels in a row is equal to the number of pixels located in a column.

**Claims**

1. A method for storing data on a film strip by inserting a digital data representation by means of exposing the film strip, the digital data representation being obtained by transforming the data into a graphical form, wherein said digital data representation, as a set of pixels, is registered on the film strip as a data block in a region corresponding to a film frame as regions of irregularly distributed silver halide crystals, the digital data representation being obtained by coding the data with the use of predefined patterns, **characterized in that**

- the imaging region or its part in a single film frame is used to write an image in an analog format;
- the digital data representation is divided into data blocks in a digital format asymmetrically filled with useful data and redundant data;
- a data block in a digital format is located outside the region used for writing the image in an analog format;
- a group of data blocks in a digital format is linked with a pictogram containing information about the location of this group of the data blocks;
- and moreover, this method includes registering redundant data with coding and computing a verification value allowing for checking the consistency of the data when reading.

2. A method according to claim 1, **characterized in that** a group of data blocks in a digital format is placed in a region of the film strip around the imaging region.

3. A method according to claim 2, **characterized in that a** group of data blocks in a digital format is placed between perforations of the film strip.

4. A method according to any of claims 1-3, **characterized in that** a group of data blocks in a digital format is placed in an amazing region that is not used for writing an image in an analog format.

5. A method according to any of claims 1-4, **characterized in that** the location of a data block in a digital format in a region corresponding to one film frame does not depend on the location of another data block in a region corresponding to another film frame,

6. A method according to any of claims 1-5, **characterized in that** more than one data block in a digital format is placed in a region corresponding to a single film frame.

7. A method according to any of claims 1-6, **characterized in that** the amount of digital data representations that can be written in a single data block depends on the size of the data block and the bit depth.

8. A method according to any of claims 1-7, **characterized in that** ECC coding is used in order to preserve the data redundancy.

9. A method according to any of claims 1-8, **characterized in that** synchronizing lines are inserted into a group of data blocks every 128 vertical columns and every 128 horizontal lines.

10. A method according to any of claims 1-9, **characterized in that** metadata (2), additional data (3), and support data (4) assisting the exposure and the photochemical process are exposed in the film strip beyond the imaging region (1).

12. A method according to claim 10, **characterized in that** the support data (4) assisting the exposure and the photochemical process comprise markers, data explicitly identifying the film frame, and a gray scale that is located below the imaging region (1) in a form of two stripes, each having twenty-one regions of different gray levels, in order to calibrate the photochemical process during developing the photographic material.

13. A method according to any of claims 1-12, **characterized in that** the smallest data block is a block of four pixels, where three pixels are the data medium whereas the fourth one is the medium verifying the data.

14. A method according to any of claims 1-13, **characterized in that** the data blocks contain pixels and the number of pixels located in a row is equal to the number of pixels located in a column.

15. A method according to any of claims 1-14, **char-**

**acterized in that** the pictogram contains also the information about that whether the data block is exposed as a positive or a negative.

**16.** A device for writing data in a film strip having an input for receiving data to be written in the film strip, a light source, a controller of the light source, and a guiding system for gliding the film strip, the device being adapted to register data in a film strip according to a method according to any of claims 1-15.

Fig. 1

Fig. 2

Fig. 3

Fig. 4

Fig. 5

Fig. 6

Fig. 7

Fig. 8

| Data bits 1 2 3 4 5 6 7 8 9 10 | Verification bits 1 2 3 4 5 6 7 8 9 10 | Cell Value Data | Cell Value Verification | Color Data | Color Verification |
|---|---|---|---|---|---|
| 0 0 0 0 0 0 0 0 0 0 | 1 1 1 1 1 1 1 1 1 1 | 0 | 1023 | | |
| 0 0 0 0 0 0 0 0 0 1 | 1 1 1 1 0 1 1 1 1 1 | 1 | 991 | | |
| 0 0 0 0 0 0 0 0 1 0 | 1 1 1 0 1 1 1 1 1 1 | 2 | 959 | | |
| 0 0 0 0 0 0 0 0 1 1 | 1 1 1 0 0 1 1 1 1 1 | 3 | 927 | | |
| 0 0 0 0 0 0 0 1 0 0 | 1 1 0 1 1 1 1 1 1 1 | 4 | 895 | | |
| 0 0 0 0 0 0 0 1 0 1 | 1 1 0 1 0 1 1 1 1 1 | 5 | 863 | | |
| 0 0 0 0 0 0 0 1 1 0 | 1 1 0 0 1 1 1 1 1 1 | 6 | 831 | | |
| 0 0 0 0 0 0 0 1 1 1 | 1 1 0 0 0 1 1 1 1 1 | 7 | 799 | | |
| 0 0 0 0 0 0 1 0 0 0 | 1 0 1 1 1 1 1 1 1 1 | 8 | 767 | | |
| 0 0 0 0 0 0 1 0 0 1 | 1 0 1 1 0 1 1 1 1 1 | 9 | 735 | | |
| 0 0 0 0 0 0 1 0 1 0 | 1 0 1 0 1 1 1 1 1 1 | 10 | 703 | | |
| 0 0 0 0 0 0 1 0 1 1 | 1 0 1 0 0 1 1 1 1 1 | 11 | 671 | | |
| 0 0 0 0 0 0 1 1 0 0 | 1 0 0 1 1 1 1 1 1 1 | 12 | 639 | | |
| 0 0 0 0 0 0 1 1 0 1 | 1 0 0 1 0 1 1 1 1 1 | 13 | 607 | | |
| 0 0 0 0 0 0 1 1 1 0 | 1 0 0 0 1 1 1 1 1 1 | 14 | 575 | | |
| 0 0 0 0 0 0 1 1 1 1 | 1 0 0 0 0 1 1 1 1 1 | 15 | 543 | | |
| 0 0 0 0 0 1 0 0 0 0 | 0 1 1 1 1 1 1 1 1 1 | 16 | 511 | | |
| 0 0 0 0 0 1 0 0 0 1 | 0 1 1 1 0 1 1 1 1 1 | 17 | 479 | | |
| 0 0 0 0 0 1 0 0 1 0 | 0 1 1 0 1 1 1 1 1 1 | 18 | 447 | | |
| 0 0 0 0 0 1 0 0 1 1 | 0 1 1 0 0 1 1 1 1 1 | 19 | 415 | | |
| 0 0 0 0 0 1 0 1 0 0 | 0 1 0 1 1 1 1 1 1 1 | 20 | 383 | | |
| 0 0 0 0 0 1 0 1 0 1 | 0 1 0 1 0 1 1 1 1 1 | 21 | 351 | | |
| 0 0 0 0 0 1 0 1 1 0 | 0 1 0 0 1 1 1 1 1 1 | 22 | 319 | | |
| 0 0 0 0 0 1 0 1 1 1 | 0 1 0 0 0 1 1 1 1 1 | 23 | 287 | | |
| 0 0 0 0 0 1 1 0 0 0 | 0 0 1 1 1 1 1 1 1 1 | 24 | 255 | | |
| 0 0 0 0 0 1 1 0 0 1 | 0 0 1 1 0 1 1 1 1 1 | 25 | 223 | | |
| 0 0 0 0 0 1 1 0 1 0 | 0 0 1 0 1 1 1 1 1 1 | 26 | 191 | | |
| 0 0 0 0 0 1 1 0 1 1 | 0 0 1 0 0 1 1 1 1 1 | 27 | 159 | | |
| 0 0 0 0 0 1 1 1 0 0 | 0 0 0 1 1 1 1 1 1 1 | 28 | 127 | | |
| 0 0 0 0 0 1 1 1 0 1 | 0 0 0 1 0 1 1 1 1 1 | 29 | 95 | | |
| 0 0 0 0 0 1 1 1 1 0 | 0 0 0 0 1 1 1 1 1 1 | 30 | 63 | | |
| 0 0 0 0 0 1 1 1 1 1 | 0 0 0 0 0 1 1 1 1 1 | 31 | 31 | | |
| 0 0 0 0 1 0 0 0 0 0 | 1 1 1 1 1 1 1 1 1 1 | 32 | 1023 | | |

Fig. 9

Fig. 10

Fig. 11

Fig. 12

Fig. 13

Fig. 14

Fig. 15

Fig. 16

Fig. 17

Fig. 18

dane — 206

wejście — 204

208 — kontroler — 210

202

212

Fig. 19

**EP 3 040 775 A2**

## REFERENCES CITED IN THE DESCRIPTION

**Patent documents cited in the description**

- US 5751505 A
- US 6229659 B
- US 20100180180 A